# EUROPÄISCHE PATENTSCHRIFT

(11) **EP 3 515 777 B1**
(45) Veröffentlichungstag und Bekanntmachung des Hinweises auf die Patenterteilung: **19.08.2020**
(21) Anmeldenummer: 17758128.7
(22) Anmeldetag: 24.08.2017
(51) Int. Cl.: B60T 17/00

(54) **LUFTAUFBEREITUNGSEINHEIT FÜR EINE BREMSANLAGE EINES NUTZFAHRZEUGS, BREMSANLAGE UND VERFAHREN ZUM BETREIBEN EINER LUFTAUFBEREITUNGSEINHEIT**
AIR TREATMENT DEVICE FOR UTILITY VEHICLE BRAKE SYSTEM AND METHOD TO RUN THE AIR TREATMENT DEVICE
SYSTÈME DE PRÉPARATION D'AIR POUR LES FREINS D'UN VÉHICULE UTILITAIRE ET PROCÉDÉ D'EMPLOI DU SYSTEME

(30) Priorität: 21.09.2016 DE 102016117837
(43) Veröffentlichungstag der Anmeldung: 31.07.2019
(73) Patentinhaber: KNORR-BREMSE Systeme für Nutzfahrzeuge GmbH, 80809 München (DE)
(72) Erfinder: LEINUNG, Andreas, 81245 München (DE); MICHALSKI, Max, 85579 Neubiberg (DE)
(86) Internationale Anmeldenummer: PCT/EP2017/071273
(87) Internationale Veröffentlichungsnummer: WO 2018/054644

(56) Entgegenhaltungen:
- EP-A1- 1 731 394
- DE-A1- 10 207 803
- DE-A1- 10 357 255
- DE-A1- 19 515 895

## Beschreibung

Die vorliegende Erfindung bezieht sich auf eine Luftaufbereitungseinheit für eine Bremsanlage eines Nutzfahrzeugs, auf eine Bremsanlage sowie auf ein Verfahren zum Betreiben einer Luftaufbereitungseinheit.

Ein Nutzfahrzeug kann eine mittels eines elektronischen Bremssystems automatisch steuerbare Bremsanlage aufweisen. Bei Ausfall des elektronischen Bremssystems kann die automatische Steuerung der Bremsanlage beispielsweise durch eine redundante Steuerelektronik mit separater Stromversorgung aufrechterhalten werden.

Die Druckschrift EP 1 731 394 A1 offenbart eine Druckluftversorgungseinrichtung.

Die Druckschrift DE 195 15 895 A1 offenbart eine Druckluft-Versorgungseinrichtung für Fahrzeug-Druckluftanlagen sowie ein Verfahren zum Steuern der Druckluft-Versorgungseinrichtung.

Die Druckschrift DE 103 57 255 A1 offenbart eine Luftaufbereitungsanlage und ein Verfahren zum Beeinflussen eines Reifendrucks bei einem Nutzkraftfahrzeug.

Vor diesem Hintergrund werden mit dem hier vorgestellten Ansatz eine Luftaufbereitungseinheit für eine Bremsanlage eines Nutzfahrzeugs, eine Bremsanlage, ein Verfahren zum Betreiben einer Luftaufbereitungseinheit sowie ein entsprechendes Computerprogramm gemäß den Hauptansprüchen vorgestellt. Durch die in den abhängigen Ansprüchen aufgeführten Maßnahmen sind vorteilhafte Weiterbildungen und Verbesserungen der im unabhängigen Anspruch angegebenen Vorrichtung möglich.

Es wird eine Luftaufbereitungseinheit für eine Bremsanlage eines Nutzfahrzeugs vorgestellt, wobei die Luftaufbereitungseinheit folgende Merkmale aufweist:
einen Steuerventilanschluss zum pneumatischen Koppeln der Luftaufbereitungseinheit mit zumindest einem einem Radbremszylinder der Bremsanlage vorgeschalteten Steuerventil zum Ändern eines Bremsdrucks in dem Radbremszylinder;
ein Beaufschlagungsventil zum Beaufschlagen des Steuerventilanschlusses mit einem Solldruck; und
ein Steuergerät zum Ansteuern des Beaufschlagungsventils,
dadurch gekennzeichnet, dass
das Steuergerät ausgebildet ist, um das Beaufschlagungsventil und/oder das Steuerventil ansprechend auf einen Ausfall eines elektronischen Bremssystems des Nutzfahrzeugs anzusteuern.

Unter einer Luftaufbereitungseinheit kann eine Einheit zum Reinigen oder Trocknen von Luft zum Betreiben der Bremsanlage verstanden werden. Beispielsweise kann es sich bei der Luftaufbereitungseinheit um eine elektronische Luftaufbereitungseinheit (EAC) handeln. Unter einem Nutzfahrzeug kann beispielsweise ein Lastkraftwagen, ein Omnibus, eine Zugmaschine oder ein Kranwagen verstanden werden. Beispielsweise kann es sich bei dem Nutzfahrzeug um ein teil- oder vollautomatisiert fahrendes Fahrzeug handeln. Das Nutzfahrzeug kann beispielsweise mit einem Antiblockiersystem (ABS) oder einem elektronischen Bremssystem (EBS) ausgestattet sein. Unter einem Steuerventil kann ein Entlüftungsventil des Antiblockiersystems verstanden werden, etwa in Form eines Magnetventils. Das Steuerventil kann beispielsweise in der Nähe des Radbremszylinders angeordnet sein. Unter einem Beaufschlagungsventil kann ein Ventilmodul aus einer oder mehreren Ventileinheiten verstanden werden. Beispielsweise kann das Beaufschlagungsventil als Magnetventilmodul mit zumindest zwei Magnetventileinheiten realisiert sein. Je nach Ausführungsform kann das Beaufschlagungsventil zusätzlich ein Relaisventil zum Aussteuern eines Solldrucks aufweisen. Unter einem Solldruck kann ein Betriebsdruck zum Betreiben der Bremsanlage oder auch ein Steuerdruck zum Ändern einer Ventilstellung eines Ventils der Bremsanlage verstanden werden. Das Relaisventil kann aufgrund seiner Pneumatik normalerweise annähernd denselben Druck mit größerem Strömungsquerschnitt ausregeln, der an seinem Steuereingang ansteht. Das Relais erhöht insofern nicht das Druckniveau, sondern erlaubt in diesem Zusammenhang die Regelung größerer Volumenströme, wie sie in den Radbremszylindern benötigt werden, aber nicht über die Magnetventile bereitgestellt werden können. Unter einem Steuergerät kann ein elektrisches Gerät verstanden werden, das Sensorsignale verarbeitet und in Abhängigkeit davon Steuer- und/oder Datensignale ausgibt. Das Steuergerät kann eine Schnittstelle aufweisen, die hard- und/oder softwaremäßig ausgebildet sein kann. Bei einer hardwaremäßigen Ausbildung können die Schnittstellen beispielsweise Teil eines sogenannten System-ASICs sein, der verschiedenste Funktionen des Steuergeräts beinhaltet. Es ist jedoch auch möglich, dass die Schnittstellen eigene, integrierte Schaltkreise sind oder zumindest teilweise aus diskreten Bauelementen bestehen. Bei einer softwaremäßigen Ausbildung können die Schnittstellen Softwaremodule sein, die beispielsweise auf einem Mikrocontroller neben anderen Softwaremodulen vorhanden sind.

Der hier vorgestellte Ansatz beruht auf der Erkenntnis, dass mittels einer Luftaufbereitungseinheit einer Bremsanlage ein einem Radbremszylinder der Bremsanlage vorgeschaltetes Steuerventil parallel zu einem elektronischen Bremssystem mit einem Druck beaufschlagt werden kann, wobei der Druck vor dem Steuerventil eingesteuert werden kann. Im Kontext autonomen Fahrens kann somit ein redundantes Bremssystem realisiert werden, das auch bei Ausfall des elektronischen Bremssystems unabhängig von Fahrereingriffen aktiv einbremsen kann. So können beispielsweise Bremskräfte abhängig von einer ladungsbedingten Aufstandskraft optimal zwischen den Achsen des Nutzfahrzeugs verteilt werden, wodurch ein möglichst kurzer Bremsweg erreicht werden kann.

Gemäß einer Ausführungsform kann das Steuergerät mit zumindest einem Raddrehzahlsensor des Nutzfahrzeugs gekoppelt oder koppelbar sein und ausgebildet sein, um das Beaufschlagungsventil oder, zusätzlich oder alternativ, das Steuerventil unter Verwendung eines von dem Raddrehzahlsensor erzeugten Raddrehzahlsensorsignals anzusteuern. Unter einem Raddrehzahlsensor kann beispielsweise ein Polradsensor verstanden werden. Das Raddrehzahlsensorsignal kann eine Drehzahl eines einzelnen Rads des Nutzfahrzeugs repräsentieren. Durch diese Ausführungsform wird ein gezieltes Abbremsen einzelner Räder des Nutzfahrzeugs mittels der Luftaufbereitungseinheit ermöglicht. Dadurch kann vermieden werden, dass die Räder des Nutzfahrzeugs beim Abbremsen blockieren.

Hierbei kann das Steuergerät ausgebildet sein, um das Beaufschlagungsventil oder, zusätzlich oder alternativ, das Steuerventil unter Verwendung des Raddrehzahlsensorsignals derart anzusteuern, dass das Nutzfahrzeug optimal an der Schlupfgrenze regelt (ABS-Bremsung) oder auch einseitig abgebremst wird. Durch das einseitige Bremsen kann eine Lenkbremsfunktion mittels der Luftaufbereitungseinheit realisiert werden, die bei Ausfall einer elektrischen Lenkung und/oder bei Fahruntüchtigkeit des Fahrers das Fahrzeug nicht nur bremsend, sondern auch lenkend sicher abstellen kann.

Gemäß einer weiteren Ausführungsform kann das Beaufschlagungsventil ein Magnetventil und ein mittels des Magnetventils pneumatisch ansteuerbares Relaisventil zum Aussteuern des Solldrucks aufweisen. Das Steuergerät kann ausgebildet sein, um das Magnetventil anzusteuern. Unter einem Relaisventil kann ein Ventil mit einem Druckeingang, einem Druckausgang und einem Steuereingang zum Steuern eines Durchflusses zwischen dem Druckeingang und dem Druckausgang unter Verwendung eines Steuerdrucks verstanden werden.

Hierbei kann das Magnetventil bistabil ausgeführt sein. Dies hat den Vorteil, dass der Steuerventilanschluss auch bei Unterbrechung einer Stromversorgung des Steuergeräts mit dem Solldruck beaufschlagt werden kann. Vorteilhaft wäre auch eine Ausführungsfrom des hier vorgestellten Ansatzes, bei dem eine Gruppe aus elektromagnetischen und pneumatischen Ventilen auch bistabil ausgeführt sein kann, um vorteilhafterweise auch zur Ansteuerung eines Parkbremszylinders und somit zur Schaltung einer elektrischen Parkbremse nicht nur an der Hinterachse geeignet zu sein.

Gemäß einer weiteren Ausführungsform kann die Luftaufbereitungseinheit eine Verteilereinheit zum Verteilen von von der Luftaufbereitungseinheit aufbereiteter Luft auf zumindest einen einer Betriebsbremse der Bremsanlage zugeordneten Bremskreis und zumindest eine Verbindungsleitung zum Verbinden der Verteilereinheit mit dem Steuerventilanschluss aufweisen. Insbesondere kann das Beaufschlagungsventil zur Betätigung der Betriebsbremse über ein Wechselventil mit einem ersten Wechselventileingang und einem zweiten Wechselventileingang ausgebildet ist, um das an dem zweiten Wechselventileingang den Ausgangssteuerdruck eines Vorderachsenventilmoduls und/oder einen Ausgangssteuerdruck des Fussbremsmoduls zu überlagern. Das Beaufschlagungsventil kann in der Verbindungsleitung angeordnet sein. Insbesondere kann die Verbindungsleitung Teil des Bremskreises sein. Unter einer Betriebsbremse kann eine auf alle Räder des Nutzfahrzeugs wirkende Bremse verstanden werden. Die Betriebsbremse wirkt beispielsweise über die ersten beiden Steueranschlüsse am Anhängersteuermodul auch auf die Betriebsbremse des Anhängerfahrzeugs, wobei der dritte Steueranschluss für die Ansteuerung des Anhängers über die Parkbremse des Nutzfahrzeugs vorgesehen ist. Die Betriebsbremse kann beispielsweise separate Bremskreise für eine Vorderachse und eine Hinterachse des Nutzfahrzeugs umfassen. Bei der Verteilereinheit kann es sich um ein Bauteil mit einem Lufteinlass zum Einlassen der aufbereiteten Luft und zumindest einem mit dem Lufteinlass verbundenen Ausgang zum Anschließen der Verteilereinheit an den Bremskreis handeln. Je nach Ausführungsform kann die Verteilereinheit eine Mehrzahl von Ausgängen zum Anschließen der Verteilereinheit an mehrere Bremskreise, etwa auch an einen Park- oder Anhängerbremskreis, aufweisen. Durch diese Ausführungsform kann eine zuverlässige Beaufschlagung des Steuerventilanschlusses mit dem Solldruck sichergestellt werden. Ferner wird dadurch eine verhältnismäßig einfache Integration des Beaufschlagungsventils in das pneumatische System der Luftaufbereitungseinheit ermöglicht, was die Herstellungskosten der Luftaufbereitungseinheit senkt. In elektronischen Luftaufbereitungen kann oftmals ein dritter Kreis verwendet werden, der zum einen zur Feststellbremse aber zum anderen zur Versorgung des Anhängersteuermoduls verwendet wird. Die Versorgung des Anhängersteuermoduls versorgt den Anhänger auch mit Luft für die Nutzung der Betriebsbremse.

Erfindungsgemäß ist das Steuergerät ausgebildet, um das Beaufschlagungsventil oder, zusätzlich oder alternativ, das Steuerventil ansprechend auf einen Ausfall eines elektronischen Bremssystems des Nutzfahrzeugs anzusteuern. Dadurch kann bei Ausfall des elektronischen Bremssystems eine ausreichende Bremsleistung der Bremsanlage sichergestellt werden.

Der hier vorgestellte Ansatz schafft weiterhin eine Bremsanlage mit folgenden Merkmalen:
einer Luftaufbereitungseinheit gemäß einer der vorstehenden Ausführungsformen;
zumindest einem einem Radbremszylinder der Bremsanlage vorgeschalteten Steuerventil zum Ändern eines Bremsdrucks in dem Radbremszylinder; und
einem Wechselventil mit einem ersten Wechselventileingang, einem zweiten Wechselventileingang und einem Wechselventilausgang, wobei der erste Wechselventileingang mit dem Steuerventilanschluss der Luftaufbereitungseinheit verbunden ist, der zweite Wechselventileingang mit einem einer Betriebsbremse der Bremsanlage zugeordneten Bremskreis verbunden ist und der Wechselventilausgang mit dem Steuerventil verbunden ist.

Eine solche Bremsanlage bietet den Vorteil einer robusten, kostengünstigen und einfachen Anbindung der Luftaufbereitungseinheit an das Steuerventil. Mittels des Wechselventils kann beispielsweise gewährleistet werden, dass der jeweils stärkere der an den Wechselventileingängen anliegenden Drücke an das Steuerventil weitergeleitet wird.

Gemäß einer Ausführungsform kann die Bremsanlage ein Relaisventil mit einem Betriebsdruckeingang, einem Betriebsdruckausgang und einem Steuereingang zum Steuern eines Durchflusses zwischen dem Betriebsdruckeingang und dem Betriebsdruckausgang unter Verwendung des Solldrucks aufweisen. Die Luftaufbereitungseinheit einen Relaisventilanschluss zum Bereitstellen eines Betriebsdrucks zum Betreiben der Bremsanlage aufweisen. Dabei kann der Betriebsdruckeingang mit dem Relaisventilanschluss verbunden sein, der Betriebsdruckausgang mit dem ersten Wechselventileingang verbunden sein und der Steuereingang mit dem Steuerventilanschluss verbunden sein. Der Relaisventilanschluss entspricht in den nachfolgend beigefügten Figuren zumindest dem in einer Luftaufbereitung beispielsweise vorhandenen Ausgang zu einem der beiden Betriebsbremskreise. Der Relaisventilanschluss entspricht somit beispielsweise dem Versorgungsausgang eines Betriebsbremskreises, die Abzweigung von diesem Bremskreis zur Versorgung des Relaisventileingangs erfolgt beispielsweise außerhalb der Luftaufbereitung durch einen zusätzlichen Abgriff von den Verrohrungen dieses Bremskreises.

Gemäß einer weiteren Ausführungsform kann die Bremsanlage ein Relaisventil mit einem Betriebsdruckeingang, einem Betriebsdruckausgang und einem Steuereingang zum Steuern eines Durchflusses zwischen dem Betriebsdruckeingang und dem Betriebsdruckausgang unter Verwendung eines an dem Wechselventilausgang bereitgestellten Drucks aufweisen. Die Luftaufbereitungseinheit kann einen Relaisventilanschluss zum Bereitstellen eines Betriebsdrucks zum Betreiben der Bremsanlage aufweisen. Dabei kann der Betriebsdruckeingang mit dem Relaisventilanschluss verbunden sein, der Betriebsdruckausgang mit dem Steuerventil verbunden sein und der Steuereingang mit dem Wechselventilausgang verbunden sein. Dadurch wird eine Ansteuerung des Relaisventils mittels des Wechselventils ermöglicht.

Es soll ferner eine bestmögliche Regelbarkeit der Betriebsbremsanlage umgesetzt werden, was bedeutet, dass die Bremskräfte vor den ABS-Steuerventilen je nach Beladung des Fahrzeugs in weiteren Ausführungsformen des hier vorgestellten Ansatzes völlig frei achsweise eingestellt werden können sollten. Im Vergleich dazu ist gemäß einem weiteren Ansatz das Bremskraftverhältnis zwischen Vorderachse und Hinterachse über eine vorgegebene pneumatische Kennlinie des Fussbremsmoduls fest vorgegeben, sodass das Bremskraftverhältnis machmal nicht optimal sein kann, sowohl für das beladene Fahrzeug (hohe Last auf Hinterachse, hoher Bremsdruck auf Hinterachse) als auch für das leere Fahrzeug (niedrige Last auf Hinterachse = niedriger Bremsdruck).

Günstig ist ferner eine Ausführungsform des hier vorgestellten Ansatzes, bei dem die Bremsanlage ausgebildet ist, um je ein Beaufschlagungsventil pro Achse von der Luftaufbereitungeinheit anzusteuern.

Von Vorteil ist weiterhin eine Ausführungsform des hier vorgestellten Ansatzes, bei dem die Bremsanlage ausgebildet ist, um zu Bereitstellung von benötigten Volumenströmen je ein Relaisventil pro Achse anzusteuern. In den nachfoglend näher beschriebenen Figuren sind meist diese zwei Relaisventile dargestellt, zum einen das besprochene Relaisventil 134 für die Vorderachse und ein zweites Relaisventil für die Hinterachse, das zu den Parkbremszylindern führt.

Denkbar ist weiterhin eine Ausführungsform des hier vorgestellten Ansatzes, bei der die Beaufschlagungsventile und/oder die Relaisventile außerhalb oder innerhalb der Luftaufbereitungseinheit angeordnet sind, aber von der Luftaufbereitungseinheit ansteuerbar sind.

Günstig ist weiterhin eine Ausführungsform bei das zumindest eines der Beaufschlagungsventile und/oder zumindest eines der Relaisventile ausgebildet ist, um in einem monostabilen oder bistabilen Zusatnd betrieben zu werden. Dies ist besodners dadurch vorteilhaft, dass im Gegensatz zur Betriebsbremse, die ein Bremsen des Betriebsbremszylinders mit Druck ausführen, bremst die Parkbremse üblicherweise mit invertierten Druckverhältnissen drucklos den Federspeicher des Parkbremszylinders und ist bistabil in Fahren und Parken. Sie sitzt meist nur auf der Hinterachse. Es gibt aber z.B. auch Fahrzeuge mit Feststellbremszylindern an der Vorderachse. Die beiden Bremskonzepte von Betriebs- und Parkbremse sollten von der Luftaufbereitung aus sowohl an Vorderachse und Hinterachse umsetzbar, gegebenenfalls bistabil ausgeführt sein.

Besondesr vorteilhaft ist es, die Bremsanlage derart auszugestalten, dass eine Bremsung stufbar ist.

Weiterhin von Vorteil ist eine Ausführungsfrom des hier vorgestellten Ansatzes, bei der der mindestens zwei elektrische Redundanzsysteme bzw. redundante Systeme zur Steuerung einer Betriebsbremse vorgesehen sind. Theoretisch könnte auch das EBS-System den Backup darstellen, falls die funktional vollwertige, im Normalfall von der Luftaufbereitung gesteuerte elektrische Betriebsbremse ausfällt.

Weiterhin kann gemäß einer weiteren Ausführungsform die Bremsanlage ausgebildet sein, um eine stufbare Ansteuerung einer Betriebsbremsfunktion unabhängig vom Fahrerwunsch oder den Fahrerwunsch dominierend vorzunehmen.

Auch kann in einer weiteren Ausführungsform die Luftaufbereitungseinheit ein Steuergerät zum Berechnen des Solldrucks für eine Betriebsbremsanlage basierend auf eingelesenen Sensor-Informationen eines Fahrerassistenzsystems aufweisen.

Von Vorteil ist weiterhin eine Ausführungsform des hier vorgestellten Ansatzes, bei der die Bremsanlage eine Luftaufbereitungseinheit aufweist, die ausgebildet ist, um zusätzlich eine pneumatische, redundante Steuerung der Betriebsbremse in Abhängigkeit des Fahrer-Bremswunsches über das Fussbremsmodul durchzuführen. Hierdurch kann eine erhöhte Sicherheit des vorgestellten Ansatzes erreicht werden.

Der hier vorgestellte Ansatz schafft ferner ein Verfahren zum Betreiben einer Luftaufbereitungseinheit gemäß einer der vorstehenden Ausführungsformen, wobei das Verfahren folgenden Schritt umfasst:
Erzeugen eines Steuersignals, um das Beaufschlagungsventil derart anzusteuern, dass der Steuerventilanschluss mit dem Solldruck beaufschlagt wird.

Von Vorteil ist auch ein Computerprogrammprodukt oder Computerprogramm mit Programmcode, der auf einem maschinenlesbaren Träger oder Speichermedium wie einem Halbleiterspeicher, einem Festplattenspeicher oder einem optischen Speicher gespeichert sein kann und zur Durchführung, Umsetzung und/oder Ansteuerung der Schritte des Verfahrens nach einer der vorstehend beschriebenen Ausführungsformen verwendet wird, insbesondere wenn das Programmprodukt oder Programm auf einem Computer oder einer Vorrichtung ausgeführt wird.

Ausführungsbeispiele der Erfindung sind in den Zeichnungen dargestellt und in der nachfolgenden Beschreibung näher erläutert. Es zeigt:
Fig. 1 eine schematische Darstellung einer Bremsanlage mit einer Luftaufbereitungseinheit gemäß einem Ausführungsbeispiel;
Fig. 2 eine schematische Darstellung einer Bremsanlage mit einer Luftaufbereitungseinheit gemäß einem Ausführungsbeispiel;
Fig. 3 eine schematische Darstellung einer Bremsanlage mit einer Luftaufbereitungseinheit gemäß einem Ausführungsbeispiel;
Fig. 4 eine schematische Darstellung eines Steuergeräts gemäß einem Ausführungsbeispiel; und
Fig. 5 ein Ablaufdiagramm eines Verfahrens gemäß einem Ausführungsbeispiel.

In der nachfolgenden Beschreibung günstiger Ausführungsbeispiele der vorliegenden Erfindung werden für die in den verschiedenen Figuren dargestellten und ähnlich wirkenden Elemente gleiche oder ähnliche Bezugszeichen verwendet, wobei auf eine wiederholte Beschreibung dieser Elemente verzichtet wird.

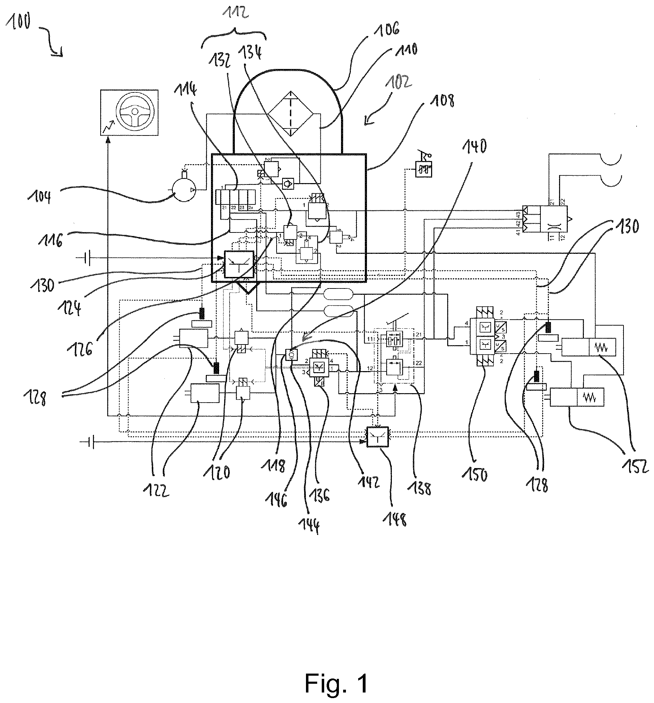

In den nachfolgend beschriebenen Figuren 1 bis 3 sind Leitungen zur elektrischen Signalübertragung mit gepunkteten Linien, pneumatische Leitungen mit durchgehenden Linien und Leitungen zur Übertragung elektrischer Energie mit pfeilförmigen Linien angedeutet. Optionale Verbindungen sind durch teils gestrichelte, teils gepunktete Linien angedeutet.

**Fig. 1** zeigt eine schematische Darstellung einer Bremsanlage 100 für ein Nutzfahrzeug mit einer Luftaufbereitungseinheit 102 gemäß einem Ausführungsbeispiel. Die Luftaufbereitungseinheit 102 umfasst eine mit einem Kompressor 104 verbundene Filterkartusche 106 zum Filtern und Trocknen der von dem Kompressor 104 bereitgestellten Druckluft. Die Filterkartusche 106 ist an einem Gehäuse 108 der Luftaufbereitungseinheit 102 angeordnet und über eine Filterkartuschenleitung 110 mit dem Gehäuse 108 pneumatisch verbunden. In dem Gehäuse 108 ist ein Beaufschlagungsventil 112 angeordnet. Gemäß diesem Ausführungsbeispiel ist das Beaufschlagungsventil 112 über eine Verteilereinheit 114 mit der Filterkartuschenleitung 110 verbunden. Eine Verbindungsleitung 116 verbindet die Verteilereinheit 114 mit einem Steuerventilanschluss 118 des Gehäuses 108. Dabei ist das Beaufschlagungsventil 112 in der Verbindungsleitung 116 angeordnet. Für eine vorteilhafte Funktion kann der Druckabgriff auch vor der Verteilereinheit 114 angeordnet sein. Es ist gemäß einem Ausführungsbeispiel wichtig, dass der Versorgungsdruck für die Beaufschlagungsventil stabil ist, das heißt, nicht mit ausbleibender Kompressorförderung auf Null fällt. Somit kann der Druckabgriff in diesem Ausführungsbeispiel auch noch zwischen der Verteilereinheit und dem Rückschlagventil liegen. Beispielhaft ist die Verbindungsleitung 116 Teil eines einer Betriebsbremse der Bremsanlage 100 zugeordneten Bremskreises. Über den Steuerventilanschluss 118 ist die Luftaufbereitungseinheit 102 beispielhaft mit zwei Steuerventilen 120, die je einem von zwei vorderen Radbremszylindern 122 einer Vorderachse des Nutzfahrzeugs vorgeschaltet sind, pneumatisch gekoppelt. Gemäß einem weiteren Ausführungsbeispiel ist der Steuerventilanschluss 118 alternativ oder zusätzlich mit einer Hinterradbremse des Nutzfahrzeugs zugeordneten Steuerventilen gekoppelt.

Das Beaufschlagungsventil 112 ist ausgebildet, um den Steuerventilanschluss 118 mit einem Solldruck zu beaufschlagen. Ein ebenfalls in dem Gehäuse 108 angeordnetes Steuergerät 124 ist ausgebildet, um das Beaufschlagungsventil 112 durch Ausgeben eines entsprechenden Steuersignals 126 anzusteuern. Die Steuerventile 120 sind ausgebildet, um einen jeweiligen Bremsdruck in den vorderen Radbremszylindern 122 zu ändern. Die Ansteuerung der Steuerventile 120 durch die Luftaufbereitungseinheit 102 erfolgt beispielsweise derart, dass ein Blockieren der Räder beim Bremsen verhindert wird oder das Nutzfahrzeug einseitig abgebremst wird.

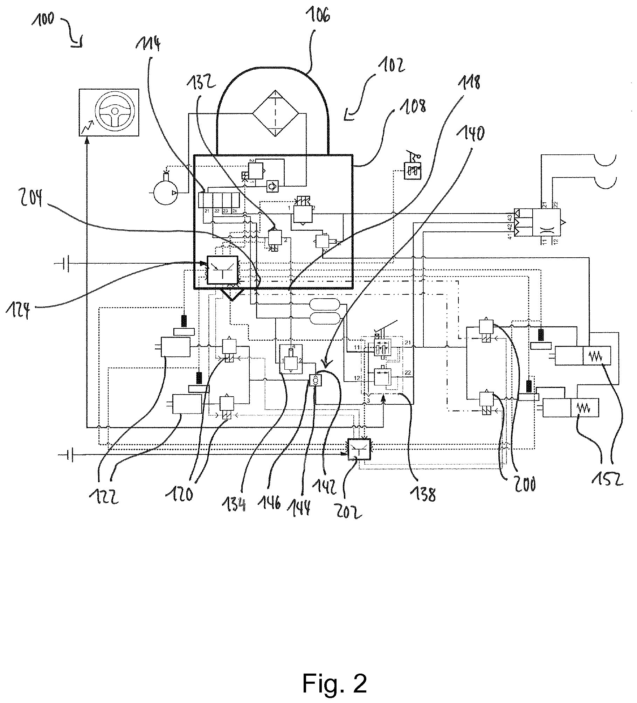

Gemäß diesem Ausführungsbeispiel ist das Beaufschlagungsventil 112 ausgebildet, um den Steuerventilanschluss 118 mit einem Solldruck zu beaufschlagen, der stufbar zwischen Umgebungsdruck und Betriebsdruck ausregelbar ist, wobei beispielsweise dieser Solldruck teils direkt vom Magnetventil, teils luftmengenverstärkt von einem Relaisventil entnommen werden kann. Alternativ kann das Beaufschlagungsventil 112 ausgebildet sein, um den Steuerventilanschluss 118 mit einem Steuerdruck zum pneumatischen Ansteuern eines den beiden Steuerventilen 120 vorgeschalteten Ventils oder Ventilmoduls der Bremsanlage 100, etwa eines Relaisventils, als dem Solldruck zu beaufschlagen, wie dies beispielsweise nachfolgend anhand von Fig. 2 näher beschrieben ist.

Beispielhaft ist das Nutzfahrzeug mit insgesamt vier optionalen Raddrehzahlsensoren 128 zum Erfassen einer Drehzahl je eines Rades an Vorder- und Hinterachse ausgestattet. Die Raddrehzahlsensoren 128 senden je ein die jeweilige Drehzahl eines Rades repräsentierendes Raddrehzahlsensorsignal 130 an das Steuergerät 124, wobei das Steuergerät 124 ausgebildet ist, um das Beaufschlagungsventil 112 unter Verwendung der Raddrehzahlsensorsignale 130, d. h. in Abhängigkeit von der jeweiligen Drehzahl der Räder, anzusteuern. Optional verwendet das Steuergerät 124 die Raddrehzahlsensorsignale 130, um zusätzlich oder alternativ zum Beaufschlagungsventil 112 die beiden Steuerventile 120 direkt elektrisch anzusteuern, insbesondere derart, dass beim Abbremsen des Nutzfahrzeugs ein Blockieren der Vorderräder vermieden wird oder das Nutzfahrzeug zusätzlich einseitig abgebremst wird.

Gemäß dem in Fig. 1 gezeigten Ausführungsbeispiel ist das Beaufschlagungsventil 112 als ein Ventilmodul aus mehreren Einzelventilen realisiert, hier aus einem Magnetventil 132 mit beispielhaft zwei Magnetventileinheiten und einem Relaisventil 134. Das Relaisventil 134 umfasst einen Betriebsdruckeingang 1, einen Betriebsdruckausgang 2 und einen Steuereingang 4 zum Steuern eines Durchflusses zwischen dem Betriebsdruckeingang 1 und dem Betriebsdruckausgang 2. Dabei ist der Betriebsdruckeingang 1 über die Verbindungsleitung 116 mit der Verteilereinheit 114 verbunden, sodass am Betriebsdruckeingang 1 der Solldruck in Form des Betriebsdrucks anliegt. Der Betriebsdruckausgang 2 ist mit dem Steuerventilanschluss 118 verbunden. Der Steuereingang 4 ist mit einem Ausgang 2 der Magnetventileinheit 132 verbunden. Diese Magnetventil-Anordnung beispielsweise zwei Magnetventile aufweisen, die benötigt werden, um Druckhalten, -aufbau und -abbau zu realisieren. Eine solche Darstellung ist in den Figuren der Übersichtlichkeit halber nicht explizit dargestellt. Die Magnetventileinheit 132 ist ausgebildet, um den Steuereingang 4 unter Verwendung des Solldrucks, hier des Betriebsdrucks, mit einem beispielsweise deutlich geringeren Steuerdruck zum Öffnen des Relaisventils 134 zu beaufschlagen, sodass am Steuerventilanschluss 118 der Solldruck anliegt. Die elektrische Ansteuerung des Magnetventils 132 erfolgt durch das Steuergerät 124.

Gemäß einem Ausführungsbeispiel ist die Beaufschlagungseinheit 112 bistabil ausgeführt. Dadurch kann sichergestellt werden, dass der Solldruck auch bei unterbrochener Stromversorgung am Steuerventilanschluss 118 anliegt. Die bistabilen Ventile können beispielsweise bei Maximal- oder Nulldruck bistabil sein. Damit sind sie geeignet zur stromlosen Aufrechterhaltung der beiden Druckzustände einer Parkbremse. Es kann also nicht ein beliebiger Solldruck stromlos aufrechterhalten werden. Die bistabile Ventileinheit wird beispielsweise in eine der Druckendstellungen regeln.

Die beiden vorderen Radbremszylinder 122 sind über ein Vorderachsenventilmodul 136 mit einem Fußbremsmodul 138 der Bremsanlage 100 verbunden. Die beiden Steuerventile 120 sind zwischen den vorderen Radbremszylindern 122 und dem Vorderachsenventilmodul 136 angeordnet. In einem die beiden Steuerventile 120 mit dem Vorderachsenventilmodul 136 verbindenden Leitungsabschnitt ist ein Wechselventil 140 mit einem ersten Wechselventileingang 142, einem zweiten Wechselventileingang 144 sowie einem Wechselventilausgang 146 angeordnet. Dabei ist der erste Wechselventileingang 142 mit dem Steuerventilanschluss 118 verbunden, der zweite Wechselventileingang 144 mit einem Ausgang des Vorderachsenventilmoduls 136 und somit einem einer Betriebsbremse der Bremsanlage 100 zugeordneten Bremskreis verbunden und der Wechselventilausgang 146 mit den beiden Steuerventilen 120 verbunden. Mittels des Wechselventils 140 kann sichergestellt werden, dass die beiden Steuerventile 120 jeweils mit dem stärkeren der an den beiden Wechselventileingängen 142, 144 anliegenden Drücke beaufschlagt werden.

Die in Fig. 1 gezeigte Bremsanlage 100 ist beispielhaft durch ein EBS-Steuergerät 148 eines elektronisches Bremssystems des Nutzfahrzeugs ansteuerbar. Hierzu ist das EBS-Steuergerät 148 beispielsweise mit den Raddrehzahlsensoren 128, dem Fußbremsmodul 138 und dem Vorderachsenventilmodul 136 zur elektrischen Signalübertragung verbunden. Erfindungsgemäß ist das Steuergerät 124 der Luftaufbereitungseinheit 102 ausgebildet, um das Beaufschlagungsventil 112 bei Ausfall des elektronischen Bremssystems anzusteuern, sodass weiterhin eine ausreichende Bremsleistung an der Vorderachse des Nutzfahrzeugs gewährleistet werden kann.

Das Fußbremsmodul 138 ist des Weiteren über ein Hinterachsenventilmodul 150 mit zwei hinteren Radbremszylindern 152 der Hinterachse des Nutzfahrzeugs verbunden. Lediglich beispielhaft sind im Unterschied zur Vorderachse keine ABS-Steuerventile zwischen dem Hinterachsenventilmodul 150 und den hinteren Radbremszylindern 152 angeordnet. Gemäß diesem Ausführungsbeispiel sind die beiden hinteren Radbremszylinder 152 ausgebildet, um die Hinterräder des Nutzfahrzeugs im entlüfteten Zustand mittels Federkraft zu blockieren. Die hinteren Radbremszylinder 152 fungieren somit als Feststell- oder Parkbremse.

**Fig. 2** zeigt eine schematische Darstellung einer Bremsanlage 100 für ein Nutzfahrzeug mit der Luftaufbereitungseinheit 102 gemäß einem Ausführungsbeispiel. Die Bremsanlage 100 entspricht im Wesentlichen der vorangehend anhand von Fig. 1 beschriebenen Bremsanlage. Im Unterschied zu Fig. 1 ist die Bremsanlage 100 in Fig. 2 ohne Vorder- und Hinterachsenventilmodul gezeigt. Stattdessen ist das Fußbremsmodul 138 über zwei weitere, den beiden hinteren Radbremszylindern 152 vorgeschaltete Steuerventile 200 mit den beiden hinteren Radbremszylindern 152 gekoppelt. Ebenso wie die beiden Steuerventile 120 der Vorderachse fungieren die beiden weiteren Steuerventile 200 der Hinterachse als ABS-Drucksteuerventile. Die elektrische Ansteuerung der vier Steuerventile 120, 200 erfolgt im Normalfall durch ein ABS-Steuergerät 202. Alternativ sind die vier Steuerventile 120, 200 bei Ausfall des ABS-Steuergeräts 202 durch das Steuergerät 124 der Luftaufbereitungseinheit 102 ansteuerbar. Auch könnte an der Hinterachse alternativ oder zusätzlich zum sichtbaren Relaisventil der Parkbremse ein Relaisventil verwendet werden, um an der Hinterachse analog wie an der Vorderachse Druck vor den Steuerventilen über ein weiteres Ventil 144 eine redundante Druckvorgabe für die Betriebsbremszylinder der Hinterachse aussteuern zu können (maximale Ausbaustufe).

Ein weiterer Unterschied zu Fig. 1 besteht darin, dass das Relaisventil 134 hier außerhalb des Gehäuses 108 angeordnet ist. Dabei ist der Betriebsdruckeingang 1 mit einem an die Verteilereinheit 114 angeschlossenen Relaisventilanschluss 204 des Gehäuses 108 verbunden, sodass der Betriebsdruckeingang 1 über den Relaisventilanschluss 204 mit dem Betriebsdruck beaufschlagt wird. Der Betriebsdruckausgang 2 ist mit dem ersten Wechselventileingang 142 verbunden, während der Steuereingang 4 mit dem Steuerventilanschluss 118 verbunden ist. Der erste Wechselventileingang 122 ist somit über das Relaisventil 134 mit dem Steuerventilanschluss 118 verbunden. Der Ausgang 2 des im Gehäuse 108 befindlichen Magnetventils 132 ist ebenfalls mit dem Steuerventilanschluss 118 verbunden und ausgebildet, um den Steuereingang 4 über den Steuerventilanschluss 118 mit dem zur pneumatischen Steuerung des Relaisventils 134 erforderlichen Steuerdruck als dem Solldruck zu beaufschlagen. Der zweite Wechselventileingang 144 ist mit dem Fußbremsmodul 138 und somit einem Betriebsbremskreis der Bremsanlage 100 verbunden. Der Wechselventilausgang 146 ist, wie in Fig. 1, mit den beiden Steuerventilen 120 der Vorderachse verbunden.

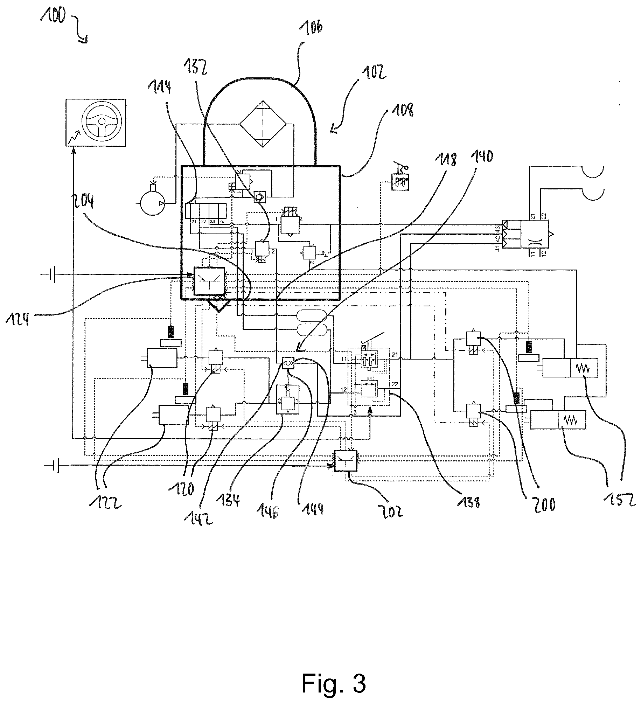

**Fig. 3** zeigt eine schematische Darstellung einer Bremsanlage 100 für ein Nutzfahrzeug mit einer Luftaufbereitungseinheit 102 gemäß einem Ausführungsbeispiel. Die in Fig. 3 gezeigte Bremsanlage 100 entspricht größtenteils der vorangehend anhand von Fig. 2 beschriebenen Bremsanlage, mit dem Unterschied, dass das Relaisventil 134 hier zwischen dem Wechselventil 140 und den beiden Steuerventilen 120 statt wie in Fig. 2 zwischen dem Steuerventilanschluss 118 und dem Wechselventil 140 angeordnet ist. Dabei ist der erste Wechselventileingang 142 wie in Fig. 1 direkt mit dem Steuerventilanschluss 118 verbunden, während der zweite Wechselventileingang 144 an das Fußbremsmodul 138 angeschlossen ist. Der Steuereingang 4 des Relaisventils 134 ist mit dem Wechselventilausgang 146 verbunden. Die pneumatische Ansteuerung des Relaisventils 134 erfolgt somit indirekt über das Wechselventil 140. Dabei ist der Betriebsdruckeingang 1 mit dem Relaisventilanschluss 204 und der Betriebsdruckausgang 2 mit den beiden Steuerventilen 120 verbunden.

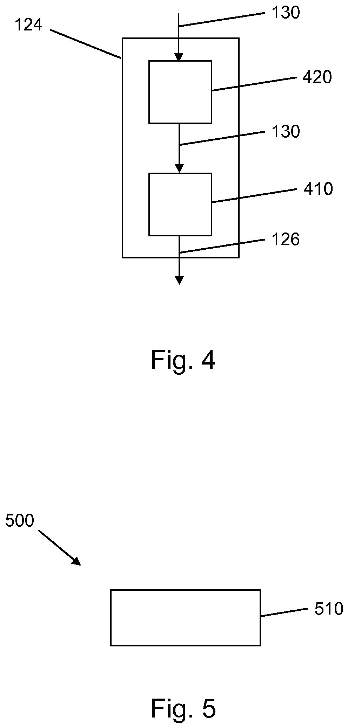

**Fig. 4** zeigt eine schematische Darstellung eines Steuergeräts 124 gemäß einem Ausführungsbeispiel, etwa eines vorangehend anhand der Figuren 1 bis 3 beschriebenen Steuergeräts. Das Steuergerät 124 umfasst eine Erzeugungseinheit 410 zum Erzeugen des Steuersignals 126. Optional umfasst das Steuergerät 124 eine Einleseeinheit 420 zum Einlesen der Raddrehzahlsensorsignale 130 und Weiterleiten der Raddrehzahlsensorsignale 130 an die Erzeugungseinheit 410. Dabei ist die Erzeugungseinheit 410 ausgebildet, um das Steuersignal 126 unter Verwendung der Raddrehzahlsensorsignale 130 zu erzeugen.

**Fig. 5** zeigt ein Ablaufdiagramm eines Verfahrens 500 zum Betreiben einer Luftaufbereitungseinheit gemäß einem Ausführungsbeispiel. Das Verfahren 500 kann beispielsweise im Zusammenhang mit einem vorangehend anhand der Figuren 1 bis 4 beschriebenen Steuergerät durchgeführt werden. Das Verfahren 500 umfasst einen Schritt 510, in dem das Steuersignal zum Ansteuern des Beaufschlagungsventils der Luftaufbereitungseinheit erzeugt wird.

Nachfolgend werden verschiedene Ausführungsbeispiele des hier vorgestellten Ansatzes nochmals mit anderen Worten zusammengefasst.

Der Solldruck der Bremsanlage 100 wird in der Regel über das Fußbremsmodul 138 auf die beiden Bremskreise der Vorder- und Hinterachse übertragen. Das Druckverhältnis der Vorder- zur Hinterachse ist dabei pneumatisch über das Fußbremsmodul 138 festgelegt. Das heißt, dass unter Umständen nicht beide Achsen gleichzeitig optimal an den Schlupf herangeregelt werden können. Selbst im ABS-Fall kann etwa auf einer der beiden Achsen der Vordruck vor den ABS-Drucksteuerventilen, vorangehend auch kurz Steuerventile genannt, suboptimal hoch sein.

Mittels des hier vorgestellten Ansatzes ist es nun möglich, den von der Luftaufbereitungseinheit 102 bereitgestellten Solldruck bei Ausfall des elektronischen Bremssystems während des autonomen Fahrens parallel zum elektronischen Bremssystem vor den ABS-Drucksteuerventilen pro Achse einzusteuern. Hiermit kann eine optimale Verteilung der Bremskräfte auf die Achsen, die in Abhängigkeit von einer ladungsbedingten Aufstandskraft stark variieren können, und damit ein möglichst kurzer Bremsweg gewährleistet werden.

Optional ist das Steuergerät 124 ausgebildet, um parallel zum elektronischen Bremssystem die Raddrehzahlsensorsignale 130, etwa Polradsignale, einzulesen. Mit Kenntnis des Radschlupfes regelt das Steuergerät 124 dann zumindest pro Achse an einen maximal zulässigen Schlupf des Rades mit geringerem Reibwert heran, ähnlich wie ein Antiblockiersystem dies tut.

Gemäß einem weiteren Ausführungsbeispiel sind die ABS-Drucksteuerventile zur Ansteuerung bei Ausfall des elektronischen Bremssystems elektrisch an das Steuergerät 124 angeschlossen. Dadurch ist es möglich, radindividuell an den Schlupf heranzuregeln, was den Bremsweg insbesondere bei seitenungleich schwankenden Reibverhältnissen verkürzen kann. Ebenfalls wird der Luftaufbereitungseinheit 102 dadurch die Möglichkeit gegeben, durch einseitiges Bremsen der gelenkten Achse Lenkungsbremsungen vorzunehmen.

Gemäß einem Ausführungsbeispiel umfasst das Beaufschlagungsventil 112 eine Magnetventileinheit 132 mit mindestens zwei Magnetventilen, die zusätzlich in die Luftaufbereitungseinheit 102 integriert sind und ausgebildet sind, um die Steuerluft mittels des Relaisventils 134 luftmengenverstärkt über ein Select-High-Ventil in einen Leitungszweig vor den ABS-Drucksteuerventilen einzuspeisen. Je nach Ausführungsbeispiel ist das Relaisventil 134 in die Luftaufbereitungseinheit 102 integriert oder außerhalb der Luftaufbereitungseinheit 102 angeordnet.

Im Fall eines Antiblockiersystems kann durch eine derartige Erweiterung der Luftaufbereitungseinheit 102 ein Antischlupfregelungsventil eingespart werden (äquivalent zu Proportionalventilen oder Differenzdruckventilen mit derselben Funktion), wenn die Luftaufbereitungseinheit 102 während der Antischlupfregelung auch im Normalfall den Versorgungsdruck über die Antischlupfregelungsventile auf die Antriebsräder übertragen kann.

Eine funktionale Erweiterung zur Erhöhung der Standsicherheit des Nutzfahrzeugs besteht beispielsweise darin, dass das Beaufschlagungsventil 112 zur Ansteuerung der Vorderachse bistabil ausgeführt wird, sodass auch nach Stromausfall oder Ausschalten der Zündung der Bremsdruck an der Vorderachse erhalten bleibt. Dies könnte in einer Notsituation das Fahrzeug noch im Stand halten, wenn die Hinterachse nur auf niedrigem Niveau zum Stehen gekommen ist.

Die Ansteuerung der Bremsanlage 100 über die Luftaufbereitungseinheit 102 ist je nach Ausführungsbeispiel auf einer oder mehreren Achsen des Nutzfahrzeugs realisiert. Dabei ist es von Vorteil, wenn an der Hinterachse statt eines Zwei-Kanal-Druckregelmoduls ein Ein-Kanal-Druckregelmodul mit nachgeschalteten ABS-Drucksteuerventilen verbaut ist, sodass bei Ausfall des elektronischen Bremssystems auch an der Hinterachse ein seitenindividueller Bremseingriff über die Luftaufbereitungseinheit 102 erfolgen kann.

Bei Erweiterung der Ansteuerung auf die mit Feststellbremszylindern ausgestatteten Achsen des Nutzfahrzeugs kann dann die hier gezeigte Bremsansteuerung der Hinterachse über eine Feststellbremse entfallen. Damit kann die Feststellbremse von der Redundanzfunktion für das autonome Fahren entkoppelt werden.

Das in Fig. 3 gezeigte Ausführungsbeispiel ist insofern hinsichtlich auszulegender lichter Weiten und Robustheit vorteilhaft, als nur Steuerströme über das Select-High-Ventil geleitet werden.

Umfasst ein Ausführungsbeispiel eine "und/oder"-Verknüpfung zwischen einem ersten Merkmal und einem zweiten Merkmal, so ist dies so zu lesen, dass das Ausführungsbeispiel gemäß einer Ausführungsform sowohl das erste Merkmal als auch das zweite Merkmal und gemäß einer weiteren Ausführungsform entweder nur das erste Merkmal oder nur das zweite Merkmal aufweist.

### BEZUGSZEICHENLISTE

- 1: Betriebsdruckeingang
- 2: Betriebsdruckausgang
- 4: Steuereingang
- 100: Bremsanlage
- 102: Luftaufbereitungseinheit
- 104: Kompressor
- 106: Filterkartusche
- 108: Gehäuse
- 110: Filterkartuschenleitung
- 112: Beaufschlagungsventil
- 114: Verteilereinheit
- 116: Verbindungsleitung
- 118: Steuerventilanschluss
- 120: Steuerventil
- 122: vorderer Radbremszylinder
- 124: Steuergerät
- 126: Steuersignal
- 128: Raddrehzahlsensor
- 130: Raddrehzahlsensorsignal
- 132: Magnetventil
- 134: Relaisventil
- 136: Vorderachsenventilmodul
- 138: Fußbremsmodul
- 140: Wechselventil
- 142: erster Wechselventileingang
- 144: zweiter Wechselventileingang
- 146: Wechselventilausgang
- 148: EBS-Steuergerät
- 150: Hinterachsenventilmodul
- 152: hinterer Radbremszylinder
- 200: weiteres Steuerventil
- 202: ABS-Steuergerät
- 204: Relaisventilanschluss
- 410: Erzeugungseinheit
- 420: Einleseeinheit
- 500: Verfahren zum Betreiben einer Luftaufbereitungseinheit
- 510: Schritt des Erzeugens

## Patentansprüche

1. Luftaufbereitungseinheit (102) für eine Bremsanlage (100) eines Nutzfahrzeugs, wobei die Luftaufbereitungseinheit (102) folgende Merkmale aufweist:
einen Steuerventilanschluss (118) zum pneumatischen Koppeln der Luftaufbereitungseinheit (102) mit zumindest einem einem Radbremszylinder (122) der Bremsanlage (100) vorgeschalteten Steuerventil (120) zum Ändern eines Bremsdrucks in dem Radbremszylinder (122);
ein Beaufschlagungsventil (112) zum Beaufschlagen des Steuerventilanschlusses (118) mit einem Solldruck; und
ein Steuergerät (124) zum Ansteuern des Beaufschlagungsventils (112),
**dadurch gekennzeichnet, dass**
das Steuergerät (124) ausgebildet ist, um das Beaufschlagungsventil (112) und/oder das Steuerventil (120) ansprechend auf einen Ausfall eines elektronischen Bremssystems des Nutzfahrzeugs anzusteuern.

2. Luftaufbereitungseinheit (102) gemäß Anspruch 1, wobei das Steuergerät (124) mit zumindest einem Raddrehzahlsensor (128) des Nutzfahrzeugs gekoppelt oder koppelbar ist und ausgebildet ist, um das Beaufschlagungsventil (112) und/oder das Steuerventil (120) unter Verwendung eines von dem Raddrehzahlsensor (128) erzeugten Raddrehzahlsensorsignals (130) anzusteuern, insbesondere derart anzusteuern, dass das Nutzfahrzeug einseitig abgebremst wird.

3. Luftaufbereitungseinheit (102) gemäß einem der vorangegangenen Ansprüche, mit einer Verteilereinheit (114) zum Verteilen von von der Luftaufbereitungseinheit (102) aufbereiteter Luft auf zumindest einen einer Betriebsbremse der Bremsanlage (100) zugeordneten Bremskreis und zumindest einer Verbindungsleitung (116) zum Verbinden der Verteilereinheit (114) mit dem Steuerventilanschluss (118), wobei das Beaufschlagungsventil (112) in der Verbindungsleitung (116) angeordnet ist, insbesondere wobei die Verbindungsleitung (116) Teil des Bremskreises ist, insbesondere wobei das Beaufschlagungsventil (112) zur Betätigung der Betriebsbremse über ein Wechselventil (140) mit einem ersten Wechselventileingang (142) und einem zweiten Wechselventileingang (144) ausgebildet ist, um das an dem zweiten Wechselventileingang (144) den Ausgangssteuerdruck eines Vorder- oder Hinterachsenventilmoduls (136) und/oder einen Ausgangssteuerdruck des Fussbremsmoduls (138) zu überlagern.

4. Bremsanlage (100) mit folgenden Merkmalen:
einer Luftaufbereitungseinheit (102) gemäß einem der Ansprüche 1 bis 3;
zumindest einem einem Radbremszylinder (122) der Bremsanlage (100) vorgeschalteten Steuerventil (120) zum Ändern eines Bremsdrucks in dem Radbremszylinder (122); und
einem Wechselventil (140) mit einem ersten Wechselventileingang (142), einem zweiten Wechselventileingang (144) und einem Wechselventilausgang (146), wobei der erste Wechselventileingang (142) mit dem Steuerventilanschluss (118) der Luftaufbereitungseinheit (102) verbunden ist, der zweite Wechselventileingang (144) mit einem einer Betriebsbremse der Bremsanlage (100) zugeordneten Bremskreis verbunden ist und der Wechselventilausgang (146) mit dem Steuerventil (120) verbunden ist.

5. Bremsanlage (100) gemäß Anspruch 4, mit einem Relaisventil (134) mit einem Betriebsdruckeingang (1), einem Betriebsdruckausgang (2) und einem Steuereingang (4) zum Steuern eines Durchflusses zwischen dem Betriebsdruckeingang (1) und dem Betriebsdruckausgang (2) unter Verwendung des Solldrucks, wobei die Luftaufbereitungseinheit (102) einen Relaisventilanschluss (204) zum Bereitstellen eines Betriebsdrucks zum Betreiben der Bremsanlage (100) aufweist, wobei der Betriebsdruckeingang (1) mit dem Relaisventilanschluss (204) verbunden ist, der Betriebsdruckausgang (2) mit dem ersten Wechselventileingang (142) verbunden ist und der Steuereingang (4) mit dem Steuerventilanschluss (118) verbunden ist.

6. Bremsanlage (100) gemäß Anspruch 5, mit einem Relaisventil (134) mit einem Betriebsdruckeingang (1), einem Betriebsdruckausgang (2) und einem Steuereingang (4) zum Steuern eines Durchflusses zwischen dem Betriebsdruckeingang (1) und dem Betriebsdruckausgang (2) unter Verwendung eines an dem Wechselventilausgang (146) bereitgestellten Drucks, wobei die Luftaufbereitungseinheit (102) einen Relaisventilanschluss (204) zum Bereitstellen eines Betriebsdrucks zum Betreiben der Bremsanlage (100) aufweist, wobei der Betriebsdruckeingang (1) mit dem Relaisventilanschluss (204) verbunden ist, der Betriebsdruckausgang (2) mit dem Steuerventil (120) verbunden ist und der Steuereingang (4) mit dem Wechselventilausgang (146) verbunden ist.

7. Bremsanlage (100) gemäß einem der Ansprüche 4 bis 6, die ausgebildet ist, um je ein Beaufschlagungsventil (112) pro Achse von der Luftaufbereitungeinheit (102) anzusteuern.

8. Bremsanlage (100) gemäß einem der Ansprüche 4 bis 6, die ausgebildet ist, um zur Bereitstellung von benötigten Volumenströmen je ein Relaisventil (134) pro Achse anzusteuern.

9. Bremsanlage (100) gemäß einem der Ansprüche 7 bis 8, bei der die Beaufschlagungsventile (112) und/oder die Relaisventile (134) außerhalb oder innerhalb der Luftaufbereitungseinheit (102) angeordnet sind, aber von der Luftaufbereitungseinheit (102) ansteuerbar sind.

10. Bremsanlage (100) gemäß einem der Ansprüche 7 bis 9, bei der das zumindest eines der Beaufschlagungsventile (112) und/oder zumindest eines der Relaisventile (134) ausgebildet ist, um in einem bistabilen Zustand betrieben zu werden.

11. Bremsanlage (100) gemäß einem der Ansprüche 4 bis 10, die ausgebildet ist, um eine Bremsung stufbar auszugestalten.

12. Bremsanlage (100) gemäß einem der Ansprüche 4 bis 11, bei der mindestens zwei elektrische Redundanzsysteme zur Steuerung einer Betriebsbremse vorgesehen sind.

13. Bremsanlage (100) gemäß einem der Ansprüche 4 bis 12, bei der die Bremsanlage (100) ausgebildet ist, um eine stufbare Ansteuerung einer Betriebsbremsfunktion unabhängig vom Fahrerwunsch oder den Fahrerwunsch dominierend vorzunehmen.

14. Bremsanlage (100) gemäß einem der Ansprüche 4 bis 13, bei der die Luftaufbereitungseinheit (102) ein Steuergerät zum Berechnen des Solldrucks für eine Betriebsbremsanlage basierend auf eingelesenen Sensor-Informationen eines Fahrerassistenzsystems aufweist.

15. Bremsanlage (100) gemäß einem der Ansprüche 4 bis 14, bei Luftaufbereitungseinheit (102) ausgebildet ist, um zusätzlich eine pneumatische, redundante Steuerung der Betriebsbremse in Abhängigkeit des Fahrer-Bremswunsches über das Fussbremsmodul (138) durchzuführen.

16. Verfahren (500) zum Betreiben einer Luftaufbereitungseinheit (102) gemäß einem der Ansprüche 1 bis 3, wobei das Verfahren (500) folgenden Schritt umfasst:
Erzeugen (510) eines Steuersignals (126), um das Beaufschlagungsventil (112) derart anzusteuern, dass der Steuerventilanschluss (118) mit dem Solldruck beaufschlagt wird.

17. Computerprogramm, das ausgebildet ist, um das Verfahren (500) gemäß Anspruch 16 auszuführen und/oder anzusteuern.

18. Maschinenlesbares Speichermedium, auf dem das Computerprogramm nach Anspruch 17 gespeichert ist.

## Claims

1. Air treatment unit (102) for a brake system (100) of a commercial vehicle, the air treatment unit (102) having the following features:
a control valve connector (118) for coupling of the air treatment unit (102) pneumatically to at least one control valve (120) which is connected upstream of a wheel brake cylinder (122) of the brake system (100) for changing a brake pressure in the wheel brake cylinder (122);
a loading valve (112) for loading the control valve connector (118) with a setpoint pressure; and
a control unit (124) for actuating the loading valve (112),
a control unit (124) for actuating the loading valve (112)
**characterised in that**
the control unit (124) is configured to actuate the loading valve (112) and/or the control valve (120) in response to a failure of an electronic brake system of the commercial vehicle.

2. Air treatment unit (102) according to claim 1, wherein control unit (124) is coupled or capable of being coupled to at least one wheel speed sensor (128) of the commercial vehicle, in order to actuate the loading valve (112) and/or the control valve (120) with the use of a wheel speed sensor signal (130) generated by the wheel speed sensor (128), in particular in such a way that the commercial vehicle is braked on one side.

3. Air treatment unit (102) according to any of the preceding claims, having a distributor unit (114) for distributing air which is treated by the air treatment unit (102) to at least one brake circuit which is assigned to a service brake of the brake system (100), and having at least one connecting line (16) for connecting the distributor unit (114) to the control valve connector (118), the loading valve (112) being arranged in the connecting line (116), the connecting line (116) being, in particular, part of the brake circuit, the loading valve (112) being configured, in particular, for actuating the service brake via a shuttle valve (140) with a first shuttle valve inlet (142) and a second shuttle valve inlet (144), in order to superimpose the outlet control pressure of a front or rear axle valve module (136) and/or an outlet control pressure of the foot brake module (138) at the second shuttle valve inlet (144).

4. Brake system (100) having the following features:
an air treatment unit (102) according to any of claims 1 to 3;
at least one control valve (120) which is connected upstream of a wheel brake cylinder (122) of the brake system (100) for changing a brake pressure in the wheel brake cylinder (122); and
a shuttle valve (140) with a first shuttle valve inlet (142), a second shuttle valve inlet (144) and a shuttle valve outlet (146), the first shuttle valve inlet (142) being connected to the control valve connector (118) of the air treatment unit (102), the second shuttle valve inlet (144) being connected to a brake circuit which is assigned to a service brake of the brake system (100), and the shuttle valve outlet (146) being connected to the control valve (120).

5. Brake system (100) according to claim 4, having a relay valve (134) with an operating pressure inlet (1), an operating pressure outlet (2) and a control inlet (4) for controlling a throughflow between the operating pressure inlet (1) and the operating pressure outlet (2) with the use of the setpoint pressure, the air treatment unit (102) having a relay valve connector (204) for providing an operating pressure for operating the brake system (100), the operating pressure inlet (1) being connected to the relay valve connector (204), the operating pressure outlet (2) being connected to the first shuttle valve inlet (142), and the control inlet (4) being connected to the control valve connector (118).

6. Brake system (100) according to claim 5, having a relay valve (134) with an operating pressure inlet (1), an operating pressure outlet (2) and a control inlet (4) for controlling a throughflow between the operating pressure inlet (1) and the operating pressure outlet (2) with the use of a pressure which is provided at the shuttle valve outlet (146), the air treatment unit (102) having a relay valve connector (204) for providing an operating pressure for operating the brake system (100), the operating pressure inlet (1) being connected to the relay valve connector (204), the operating pressure outlet (2) being connected to the control valve (120), and the control inlet (4) being connected to the shuttle valve outlet (146).

7. Brake system (100) according to any of claims 4 to 6, which is configured to actuate one loading valve (112) each per axle by the air treatment unit (102).

8. Brake system (100) according to any of claims 4 to 6, which is configured to actuate one relay valve (134) each per axle in order to provide required volumetric flows.

9. Brake system (100) according to any of claims 7 to 8, in which the loading valves (112) and/or the relay valves (134) are arranged outside or inside the air treatment unit (102), but can be actuated by the air treatment unit (102).

10. Brake system (100) according to any of claims 7 to 9, in which at least one of the loading valves (112) and/or at least one of the relay valves (134) are/is configured to be operated in a bistable state.

11. Brake system (100) according to any of claims 4 to 10, which is configured to make a braking operation capable of being stepped.

12. Brake system (100) according to any of claims 4 to 11, in which at least two electric redundancy systems are provided for controlling a service brake.

13. Brake system (100) according to any of claims 4 to 12, in which the brake system (100) is configured to perform a steppable actuation of a service brake function in a manner which is independent of the driver request or in a manner which dominates the driver request.

14. Brake system (100) according to any of claims 4 to 13, in which the air treatment unit (102) has a control unit for calculating the setpoint pressure for a service brake system in a manner which is based on read-in sensor information of a driver assistance system.

15. Brake system (100) according to any of claims 4 to 14, in which the air treatment unit (102) is configured to additionally carry out a pneumatic, redundant control of the service brake in a manner which is dependent on the driver brake request via the foot brake module (138).

16. Method (500) for operating an air treatment unit (102) according to any of claims 1 to 3, the method (500) comprising the following steps:
generating (510) of a control signal (126), in order to actuate the loading valve (112) in such a way that the control valve connector (118) is loaded with the setpoint pressure.

17. Computer programme which is configured to carry out and/or actuate the method (500) according to claim 16.

18. Machine-readable storage medium, on which the computer programme according to claim 17 is stored.

## Revendications

1. Unité (102) de préparation d'air pour une installation (100) de freinage d'un véhicule utilitaire, l'unité (102) de préparation d'air ayant les caractéristiques suivantes :
un raccord (118) de vanne de commande pour la connexion pneumatique de l'unité (102) de préparation de l'air à au moins une vanne (120) de commande montée en amont d'un cylindre (122) de frein de roue de l'installation (100) de freinage, afin de modifier une pression de frein dans le cylindre (122) de frein de roue ;
une vanne (112) d'application pour appliquer une pression de consigne au raccord (118) de la vanne de commande ; et
un appareil (124) de commande pour commander la vanne (112) d'application,
**caractérisée en ce que**
l'appareil (124) de commande est constitué pour commander la vanne (112) d'application et/ou la vanne (120) de commande en réaction à une défaillance d'un système électronique de frein du véhicule automobile.

2. Unité (102) de préparation d'air suivant la revendication 1, dans lequel l'appareil (124) de commande est relié à au moins un capteur (128) de vitesse de rotation de roue du véhicule utilitaire ou peut l'être et est constitué pour commander la vanne (112) d'application et/ou la vanne (120) de commande, en utilisant un signal (130) de capteur de vitesse de rotation de roue produit par le capteur (128) de vitesse de rotation de roue, en la commandant notamment de manière à freiner unilatéralement le véhicule utilitaire.

3. Unité (102) de préparation d'air suivant l'une des revendication précédentes, comprenant une unité (114) de répartiteur pour répartir de l'air préparé par l'unité (102) de préparation d'air sur au moins un circuit de frein associé à un frein de service de l'installation (100) de freinage et au moins un conduit (116) de communication pour relier l'unité (114) de répartiteur au raccord (118) de la vanne de commande, la vanne (112) d'application étant montée dans le conduit (116) de communication, dans laquelle notamment le conduit (116) de communication fait partie du circuit de frein, dans laquelle notamment la vanne (112) d'application est constituée pour l'actionnement du frein de service par l'intermédiaire d'une vanne (140) à deux voies ayant une première entrée (142) et une deuxième entrée (144), afin de superposer à la deuxième entrée (144) de la vanne à deux voies la pression de commande de sortie d'un module (136) de vanne d'essieu avant ou d'essieu arrière et/ou une pression de commande de sortie du module (138) de frein à pied.

4. Installation (100) de freinage ayant les caractéristiques suivantes :
une unité (102) de préparation d'air suivant l'une des revendications 1 à 3 ;
au moins une vanne (120) de commande en amont du cylindre (122) de frein de roue de l'installation (100) de freinage pour modifier une pression de frein dans le cylindre (122) de frein de roue ; et
une vanne (140) à deux voies ayant une première entrée (142), une deuxième entrée (144) et une sortie (146), la première entrée (142) étant reliée au raccord (118) de vanne de commande de l'unité (102) de préparation d'air, la deuxième entrée (144) étant reliée à un circuit de frein associé à un frein de service de l'installation (100) de freinage et la sortie (146) à la vanne (120) de commande.

5. Installation (100) de freinage suivant la revendication 4, comprenant une vanne (134) relais ayant une entrée (1) de pression de service, une sortie (2) de pression de service et une entrée (4) de commande pour commander un débit entre l'entrée (1) de pression de service et la sortie (2) de pression de service, en utilisant la pression de consigne, l'unité (102) de préparation d'air ayant un raccord (204) de vanne relais pour mettre à disposition une pression de service pour faire fonctionner l'installation (100) de freinage, l'entrée (1) de pression de service étant reliée au raccord (204) de la vanne relais, la sortie (2) de pression de service étant reliée à l'entrée (142) de la vanne à deux voies et l'entrée (4) de commande étant reliée au raccord (118) de la vanne de commande.

6. Installation (100) de freinage suivant la revendication 5, comprenant une vanne (134) relais ayant une entrée (1) de pression de service, une sortie (2) de pression de service et une entrée (4) de commande pour commander un débit entre l'entrée (1) de pression de service et la sortie (2) de pression de service, en utilisant une pression mise à disposition à la sortie (146) de la vanne à deux voies, l'unité (102) de traitement d'air ayant un raccord (204) de vanne relais pour la mise à disposition d'une pression de service pour faire fonctionner l'installation (100) de freinage, l'entrée (1) de pression de service étant reliée au raccord (204) de la vanne relais, la sortie (2) de pression de service étant reliée à la vanne (120) de commande et l'entrée (4) de commande étant reliée à la sortie (146) de la vanne à deux voies.

7. Installation (100) de freinage suivant l'une des revendications 4 à 6, qui est constituée pour commander, respectivement, une vanne (112) d'application par essieu de l'unité (102) de préparation d'air.

8. Installation (100) de freinage suivant l'une des revendications 4 à 6, qui est constituée pour commander par essieu, respectivement, une vanne (134) relais pour la mise à disposition de courants en volume nécessaires.

9. Installation (100) de freinage suivant l'une des revendications 7 à 8, dans laquelle les vannes (112) d'application et/ou les vannes (134) relais sont disposées à l'extérieur ou à l'intérieur de l'unité (102) de préparation d'air, mais peuvent être commandées par l'unité (102) de préparation d'air.

10. Installation (100) de freinage suivant l'une des revendications 7 à 9, dans laquelle la au moins une des vannes (112) d'application et/ou la au moins une des vannes (134) relais est constituée pour être mise en fonctionnement dans un état bistable.

11. Installation (100) de freinage suivant l'une des revendications 4 à 10, qui est constituée pour donner un freinage avec possibilité d'échelon.

12. Installation (100) de freinage suivant l'une des revendications 4 à 11, dans laquelle il est prévu au moins deux systèmes électriques redondants de commande d'un frein de service.

13. Installation (100) de freinage suivant l'une des revendications 4 à 12, dans laquelle l'installation (100) de freinage est constituée de manière à effectuer une commande avec possibilité d'échelon d'une fonction de frein de service, indépendamment du souhait du conducteur ou d'une manière dominée par le souhait du conducteur.

14. Installation (100) de freinage suivant l'une des revendications 4 à 13, dans laquelle l'unité (102) de préparation d'air a un appareil de commande pour calculer la pression de consigne d'un système de frein de service reposant sur une information lue d'un capteur d'un système d'assistance à la conduite.

15. Installation (100) de freinage suivant l'une des revendications 4 à 14, dans laquelle l'unité (102) de préparation d'air est constituée pour effectuer supplémentairement une commande pneumatique redondante du frein de service en fonction du souhait de freinage du conducteur par l'intermédiaire du module (138) de frein au pied.

16. Procédé (500) pour faire fonctionner une unité (102) de préparation d'air suivant l'une des revendications 1 à 3, le procédé (500) comprenant le stade suivant :
production (510) d'un signal (126) de commande pour commander la vanne (112) d'application, de manière à appliquer la pression de consigne au raccord (118) de la vanne de commande.

17. Programme d'ordinateur constitué pour exécuter et/ou commander le procédé (500) suivant la revendication 16.

18. Support de mémoire déchiffrable par ordinateur, sur lequel le programme d'ordinateur suivant la revendication 17 est mis en mémoire.
